# EUROPEAN PATENT SPECIFICATION

(11) **EP 3 018 385 B1**
(45) Date of publication and mention of the grant of the patent: **10.06.2020**
(21) Application number: 14846270.8
(22) Date of filing: 31.01.2014
(51) Int. Cl.: F16H 25/22

(54) **BALL SCREW**
KUGELSCHRAUBE
VIS À BILLES

(30) Priority: 19.09.2013 JP 2013194582
(43) Date of publication of application: 11.05.2016
(73) Proprietor: NSK Ltd., Tokyo 141-8560 (JP)
(72) Inventor: SAKAI, Motoshi, Fujisawa-shi Kanagawa 251-8501 (JP); HASHIMOTO, Koji, Fujisawa-shi Kanagawa 251-8501 (JP)
(74) Representative: Klingseisen, Franz
(86) International application number: PCT/JP2014/000525
(87) International publication number: WO 2015/040766

(56) References cited:
- EP-A1- 1 193 422
- EP-A1- 1 584 542
- EP-A1- 1 914 447
- EP-A1- 2 520 829
- WO-A2-00/29760
- JP-A- H11 147 566
- JP-A- 2002 235 829
- JP-A- 2010 038 217
- JP-A- 2010 179 835
- JP-A- 2010 270 916

## Description

### Technical Field

The present invention relates to a ball screw.

### Background Art

Ball screws are devices including a nut having a spiral groove formed in an inner peripheral surface, a screw shaft having a spiral groove formed in an outer peripheral surface, balls arranged between a raceway formed by the spiral groove of the nut and the spiral groove of the screw shaft; and a ball return passage for returning the balls from an end point of the raceway to a start point. The ball screw is configured such that via the balls that roll within the raceway, the nut moves relatively to the screw shaft and coverts a linear motion into a rotational motion or converts a rotational motion into a linear motion.

Such ball screws are used not only for positioning devices or the like of general industrial machines but also for electric actuators mounted on vehicles, such as automobiles, two-wheeled vehicles, and ships. Such electric actuators are demanded to be low in vibration and small in noise.

PTL 1 discloses a linear motion actuator including a rotational motion element and a linear motion element, and a ball screw mechanism that converts a rotational motion transmitted to the rotational motion element into a linear motion. The ball screw mechanism has a guide protrusion that is provided in the linear motion element and protrudes in a radial direction, and a guide groove that guides the guide protrusion. The guide groove is arranged at a fixing portion facing the linear motion element so as to engage with the guide protrusion to guide the guide protrusion in an axial direction. The detent of the linear motion element is performed by the engagement between the guide groove and the guide protrusion.

Additionally, in the above ball screw mechanism, the axial length of the guide protrusion is set to a length capable of protruding from the guide groove by a predetermined length while engaging with the guide groove. Additionally, a locking portion capable of locking the guide protrusion to the rotational motion element is provided. At the stroke end of the axial motion element, the guide protrusion protrudes from the guide groove by a predetermined length while engaging with the guide groove, and a protruding portion of the guide protrusion is locked to the locking portion. That is, the guide protrusion has not only the detent function of the linear motion element but also the stopper function for the rotational motion element.

Additionally, PTL 1 discloses an example of a nut in which the rotational motion element constitutes the ball screw mechanism and which has a columnar body protruding from an axial end surface as the locking portion. When the shape of the nut of the ball screw is not a simple cylindrical member as in this example, the center of gravity of the nut deviates from the rotational center line of the nut. If the center of gravity of the nut deviates from the rotational center line of the nut, the nut rotates unevenly when the ball screw is driven. Along with this, a load applied to the balls that roll within a raceway becomes uneven. As a result, since the circulation of the balls becomes uneven, vibration is generated in the ball screw.

Meanwhile, in a ball screw including a return tube as a member that forms the ball return passage, the return tube is attached to a flat surface provided on the outer peripheral surface of the nut. Therefore, the center of gravity of the nut deviates from the rotational center line of the nut.

In contrast, PTL 2 discloses that the center of gravity of a nut is brought close to a rotational center line of a nut by forming the shape of the nut in a shape in which a flat portion (attachment seat) for attaching a return tube, and plural thinning machined portions (cut-off portions of an outer peripheral portion) are provided at a cylindrical member or by providing the attachment seat with a weight member.

It is to be noted that in a ball screw including a piece as a member that forms the ball return passage, the piece in which a recessed portion that forms the ball return passage is formed is fitted into a through-hole that is provided in the nut and extends in the radial direction of the nut. Generally, the piece allows a start point and an end point of a raceway equivalent to one circulation of the ball screw to communicate with each other and allows a ball at the end point of the ball screw to ride over the screw thread (land portion) of the spiral groove to return the ball to the start point. Usually, plural pieces are arranged at equal intervals in the circumferential direction of the nut.

### Citation List

### Patent Literature

PTL 1: JP 2013-100921 A (see also EP 2 520 829 A)
PTL 2: JP 2010-38217 A

### Summary of Invention

### Technical Problem

As mentioned above, in the ball screw mechanism described in PTL 1, the nut has a protruding portion that protrudes from the axial end surface in one place in the circumferential direction. As a result, there is a problem that the nut rotates unevenly when the ball screw is driven, and vibration is generated.

If the method described in PTL 2 is applied in order to solve this problem, the thickness of the nut becomes small due to the thinning machined portions. Therefore, the strength needed for the nut may not be ensured. If the strength of the nut is ensured by thickening the thinning machined portions, portions other than the thinning machined portions become excessively thick. As a result, there are concerns about enlargement of the entire nut and an increase in the weight of the nut. Besides, the manufacturing cost of the nut is increased by forming the thinning machined portions.

An object of the present invention is to bring the center of gravity of a nut close to a rotational center line of the nut without forming a thinning machined portion in the nut, in a ball screw including the nut having a protruding portion protruding from an axial end surface in a portion in a circumferential direction.

### Solution to Problem

This problem is solved by means of a ball screw with the features of claim 1, claim 2 or claim 3. The ball screw has the following configurations (a) to (d).
(a) The ball screw is a device including a nut having a spiral groove formed on an inner peripheral surface; a screw shaft having a spiral groove formed on an outer peripheral surface; balls arranged between a raceway formed by the spiral groove of the nut and the spiral groove of the screw shaft; and a ball return passage configured to return the balls from an end point of the raceway to a start point of the raceway. In the above-described device, the balls roll within the raceway and the screw shaft moves in an axial direction when the nut rotates.
(b) The nut includes a protruding portion configured to protrude from an axial end surface.
(c) The ball return passage is a recessed portion formed on the inner peripheral surface of the nut.
(d) A center of gravity of the nut deviates from a rotational center line due to the protruding portion, and deviation is made smaller by the recessed portion.

A portion of the nut in which the recessed portion is formed is lighter than the other portions of the nut, and a portion of the nut in which the protruding portion is formed is heavier than the other portions of the nut. According to the present invention, the deviation of the center of gravity of the nut from the rotational center line caused by the protruding portion is made small by appropriately combining a light portion resulting from the recessed portion with a heavy portion resulting from the protruding portion.

The recessed portion is formed by a piece being fitted into a through-hole passing through the nut in a radial direction, and may be formed in an inner peripheral surface of a cylindrical nut material by a forging process. In any case, the ball screw of an embodiment has the following configuration (e). Accordingly, the deviation of the center of gravity of the nut from the rotational center line caused by the protruding portion is able to be made small by the configuration of the recessed portion.
(e) The nut includes two recessed portions arranged at the positions where central angles with the protruding portion being as a reference become 90 degrees or less in a circumferential direction of the nut.

In the above-described ball screw, when the recessed portion may be formed by the piece being fitted into the through-hole passing through the nut in the radial direction, the piece may be made of synthetic resin. This is because, generally, the nut is made of metal, and the protruding portion is made of metal because of being integrated with the nut. Therefore, if the piece is made of metal when the protruding portion is large or when the piece is large, sufficient effects may not be obtained.

Synthetic resins that form the piece include polyphenylene sulfide (PPS), polyacetal (POM), and the like. Additionally, the piece may be manufactured using resin compositions in which a reinforcing material consisting of glass fibers, potassium titanate fibers, or the like is mixed with these synthetic resins.

Instead of configuration (e), the ball screw may have one of the following configurations (f) to (g).

Accordingly, the deviation of the center of gravity of the nut from the rotational center line caused by the protruding portion is able to be made small by the configuration of the recessed portion.
(f) The nut includes at least three pieces, all the pieces have the same dimensions and may be arranged at equal intervals in a circumferential direction of the nut, and a first one of the pieces may be arranged at the position same as the position of the protruding portion in the circumferential direction of the nut and is made of a material with a specific gravity smaller than the specific gravities of the other pieces.

For example, a piece made of synthetic resin is able to be used as the first piece made of the material with a smaller specific gravity, and a metallic piece is able to be used as the other pieces. As an example of the metallic piece, a piece formed by a metal powder injection molding method (MIM) is able to be used. An alloy for the MIM to be used includes, for example, Fe-Ni-C (1 to 8% Ni and 0.8% C).
(g) The nut includes at least three pieces, all the pieces may be arranged at equal intervals in a circumferential direction of the nut, and a first one of the pieces may be arranged at the position same as the position of the protruding portion in the circumferential direction of the nut, and has dimensions smaller than the dimensions of the other pieces.

The method for forming the above configurations (e) to (g) does not increase the manufacturing cost of the nut unlike the method of PTL 2 that forms a thinning machined portion in the nut.

The ball screw in the present invention is able to be used for a wide range of applications, such as in automobile parts, outboard motors, and positioning devices, and particularly, is able to be suitably used for actuators for brakes of automobiles.

### Advantageous Effects of Invention

According to the present invention, in the ball screw including the nut having the protruding portion protruding from the axial end surface in a portion in the circumferential direction, the center of gravity of the nut can be brought close to the rotational center line of the nut without forming a thinning machined portion in the nut.

### Brief Description of Drawings

FIG. 1 is a perspective view illustrating a ball screw in a first embodiment not in conformity with the claims;
FIG. 2A is a right perspective view illustrating a ball screw in a second embodiment;
FIG. 2B is a left perspective view of the ball screw;
FIG. 2C is a front view of the ball screw;
FIG. 3A is a perspective view illustrating a ball screw in a third embodiment;
FIG. 3B is a front view of the ball screw;
FIG. 4A is a perspective view illustrating a ball screw in a fourth embodiment; and
FIG. 4B is a front view of the ball screw.

### Description of Embodiments

Hereinafter, although embodiments of the present invention will be described, the present invention is not limited to the following embodiments.

### First Embodiment

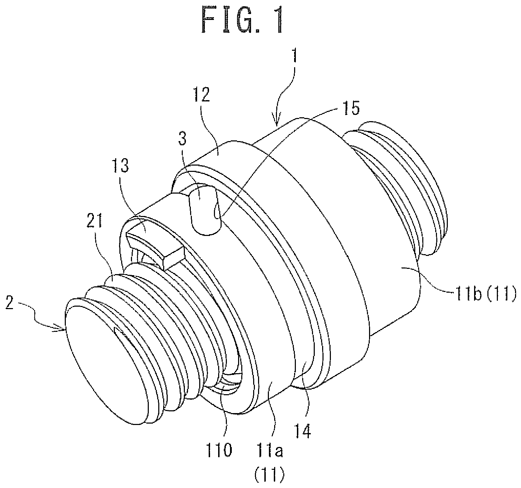

As illustrated in FIG. 1, a ball screw of this embodiment has a nut 1, a screw shaft 2, and a single piece 3.

The nut 1 has a cylindrical portion 11, a flange portion 12 formed at the center of the cylindrical portion 11 in an axial direction, and a protruding portion 13 that protrudes from one end surface in the axial direction. The cylindrical portion 11 is divided into a first portion 11a in which the protruding portion 13 is formed in the axial direction of the nut 1, and a second portion 11b excluding the first portion, by the flange portion 12. A peripheral groove 14 is formed at the boundary of the first portion 11a between the first portion 11a and the flange portion 12. A through-hole 15 passing through the nut 1 in a radial direction is a portion including the peripheral groove 14 of the first portion 11a in the axial direction, and is formed at the same position as the protruding portion 13 in a circumferential direction.

An inner peripheral surface of the cylindrical portion 11 has a spiral groove 110. An outer peripheral surface of the screw shaft 2 is formed with a spiral groove 21. Plural balls are arranged between raceways formed by the spiral groove 110 of the nut 1 and the spiral groove 21 of the screw shaft 2.

The piece 3 has an elongated small piece shape, both ends of the piece in a longitudinal direction are formed in a substantially semicircular arc shape, a recessed portion along the longitudinal direction that forms a ball return passage is formed in one surface of the piece, and the other surface of the piece becomes a circumferential surface concentric with the cylindrical portion 11. The piece 3 is obtained by an injection molding method using PPS. The piece 3 is fitted to the through-hole 15 of the nut 1 such that a recessed portion side is directed to the screw shaft 2 side. Accordingly, the piece 3 is arranged at the same position as the protruding portion 13 in the circumferential direction of the nut 1, and the inner peripheral surface of the nut 1 is formed with the ball return passage consisting of the recessed portion of the piece 3.

The protruding portion 13 is made of steel and is formed integrally with the cylindrical portion 10. That is, the shape of the nut 1 is given by cutting a cylindrical material made of a steel material. A portion of the nut 1 in which the piece 3 is fitted to the through-hole 15 is lighter than the other portions of the nut 1, and a portion of the nut 1 in which the protruding portion 13 is formed is heavier than the other portions of the nut 1.

In the ball screw of this embodiment, the deviation of the center of gravity of the nut 1 from a rotational center line caused by the protruding portion 13 is eliminated or is made small by the recessed portion of the piece 3 being arranged at the same position as the protruding portion 13 in the circumferential direction of the nut 1 (that is, the configuration of the recessed portion that constitutes the ball return passage).

### Second Embodiment

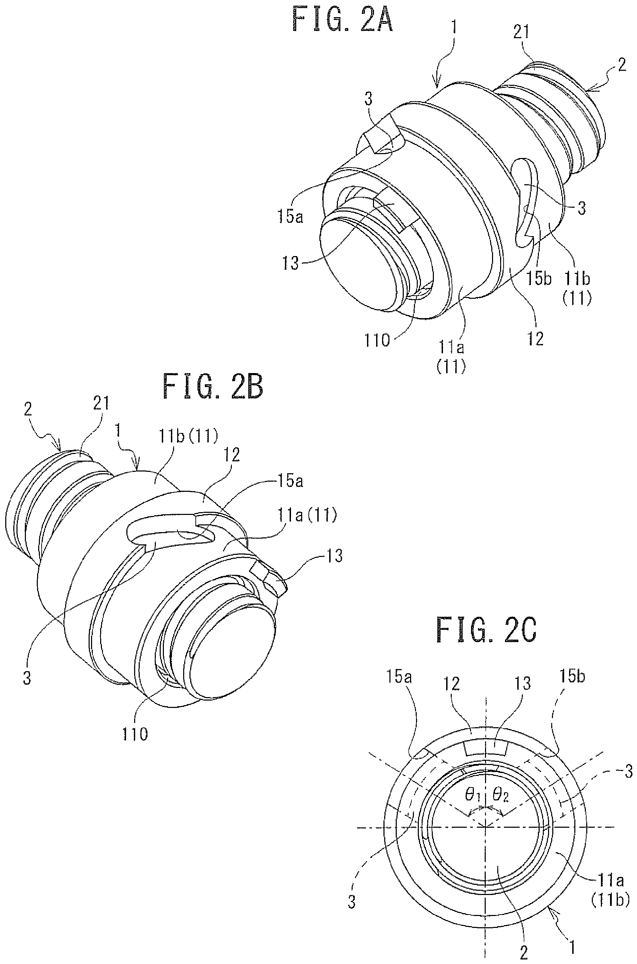

As illustrated in FIG. 2, a ball screw of this embodiment has the nut 1, the screw shaft 2, and two pieces 3.

The nut 1 has the cylindrical portion 11, the flange portion 12 formed at the center of the cylindrical portion 11 in the axial direction, and the protruding portion 13 that protrudes from one end surface in the axial direction. The cylindrical portion 11 is divided into the first portion 11a in which the protruding portion 13 is formed in the axial direction of the nut 1, and the second portion 11b excluding the first portion, by the flange portion 12.

The nut 1 has two through-holes 15a and 15b passing through the nut 1 in the radial direction. One through-hole 15a is the portion of the first portion 11a including the flange portion 12 in the axial direction, and is formed at a position where a central angle θ1 based on the protruding portion 13 in the circumferential direction becomes 57 degrees. The other through-hole 15b is the portion of the second portion 11b including the flange portion 12 in the axial direction, and is formed at a position where a central angle θ2 based on the protruding portion 13 in the circumferential direction becomes 57 degrees.

The inner peripheral surface of the cylindrical portion 11 is formed with the spiral groove 110. The outer peripheral surface of the screw shaft 2 is formed with the spiral groove 21. The plurality of balls is arranged between the raceways formed by the spiral groove 110 of the nut 1 and the spiral groove 21 of the screw shaft 2.

The two pieces 3 are the same and have an elongated small piece shape, both ends of each piece in a longitudinal direction are formed in a substantially semicircular arc shape, a recessed portion along the longitudinal direction that forms a ball return passage is formed in one surface of the piece, and the other surface of the piece becomes a circumferential surface concentric with the cylindrical portion 11. The pieces 3 are manufactured by a metal powder injection molding method using Fe-Ni-C (1 to 8% Ni and 0.8% C). The pieces 3 are fitted to the through-holes 15a and 15b of the nut 1 such that recessed portion sides are directed to the screw shaft 2 side. Accordingly, the two pieces 3 are arranged at positions where central angles θ1 and θ2 based on the protruding portion 13 in the circumferential direction of a nut 1 become 57 degrees, respectively, and the inner peripheral surface of the nut 1 is formed with two ball return passages consisting of the recessed portions of the respective pieces 3.

The protruding portion 13 is made of steel and is formed integrally with the cylindrical portion 10. That is, the shape of the nut 1 is given by cutting a cylindrical material made of a steel material. Portions of the nut 1 in which the pieces 3 are fitted to the through-holes 15a and 15b are lighter than the other portions of the nut 1, and a portion of the nut 1 in which the protruding portion 13 is formed is heavier than the other portions of the nut 1.

In the ball screw of this embodiment, the deviation of the center of gravity of the nut 1 from the rotational center line caused by the protruding portion 13 is eliminated or is made small by the recessed portions of the pieces 3 being arranged at positions where the central angles based on the protruding portion 13 in the circumferential direction of the nut 1 become equal to or lower than 90 degrees (that is, the configuration of the recessed portions that constitute the ball return passages).

### Third Embodiment

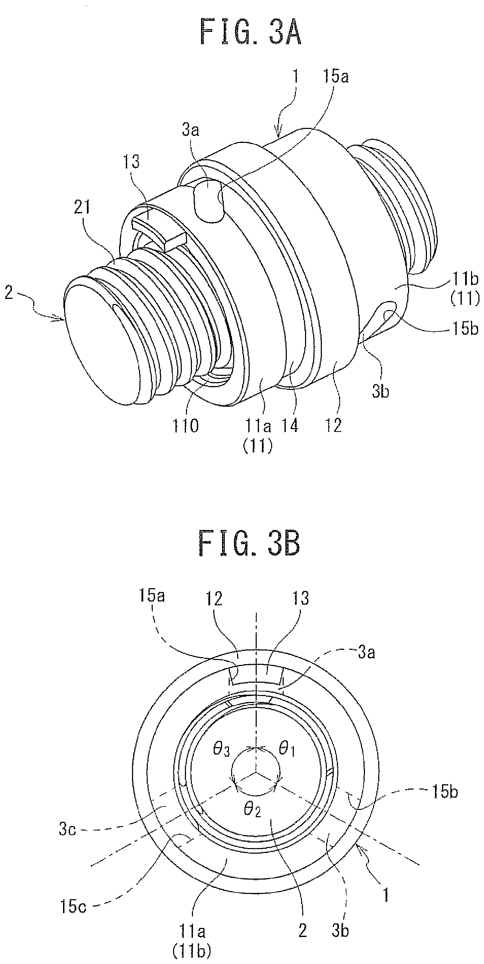

As illustrated in FIG. 3, a ball screw of this embodiment has the nut 1, the screw shaft 2, and three pieces 3a to 3c.

The nut 1 has the cylindrical portion 11, the flange portion 12 formed at the center of the cylindrical portion 11 in the axial direction, and the protruding portion 13 that protrudes from one end surface in the axial direction. The cylindrical portion 11 is divided into the first portion 11a in which the protruding portion 13 is formed in the axial direction of the nut 1, and the second portion 11b excluding the first portion, by the flange portion 12. The peripheral groove 14 is formed at the boundary of the first portion 11a between the first portion 11a and the flange portion 12.

The nut 1 is formed with three through-holes 15a to 15c passing through the nut in the radial direction. A first through-hole 15a is a portion including the peripheral groove 14 of the first portion 11a in the axial direction, and is formed at the same position as the protruding portion 13 in the circumferential direction. A second through-hole 15b is formed in the second portion 11b in the axial direction. A third through-hole 15c is formed in the second portion 11b in the axial direction. The three through-holes 15a to 15c are formed at equal intervals (θ1 = θ2 = θ3 = 120 degrees) in the circumferential directions of the nut 1.

The three pieces 3 have an elongated small piece shape, both ends of each piece in a longitudinal direction are formed in a substantially semicircular arc shape, a recessed portion along the longitudinal direction that forms a ball return passage is formed in one surface of the piece, and the other surface of the piece becomes a circumferential surface concentric with the cylindrical portion 11. Although the three pieces 3 have the same dimensions, the first piece 3a is obtained by an injection molding method using PPS, and the second piece 3b and the third piece 3c are manufactured by a metal powder injection molding method using Fe-Ni-C (1 to 8% Ni and 0.8% C). The pieces 3a to 3c are respectively fitted to the through-holes 15a to 15c of the nut 1 such that recessed portion sides are directed to the screw shaft 2 side. Accordingly, the first piece 3a is arranged at the same position as the protruding portion 13 in the circumferential direction of the nut 1, and the three pieces 3 are arranged at equal intervals (θ1 = θ2 = θ3 = 120 degrees) in the circumferential directions of the nut 1, and the inner peripheral surface of the nut 1 is formed with three ball return passages consisting of the recessed portions of the respective pieces 3.

The protruding portion 13 is made of steel and is formed integrally with the cylindrical portion 10. That is, the shape of the nut 1 is given by cutting a cylindrical material made of a steel material. Portions of the nut 1 in which the pieces 3a to 3c are fitted to the through-holes 15a to 15c are lighter than the other portions of the nut 1, and a portion of the nut 1 in which the protruding portion 13 is formed is heavier than the other portions of the nut 1.

In the ball screw of this embodiment, the nut 1 has the three pieces 3a to 3c, all the pieces 3a to 3c have the same dimensions and are arranged at equal intervals in the circumferential direction of the nut 1, the first piece 3a is arranged at the same position as the protruding portion 13 in the circumferential direction of the nut 1, and the deviation of the center of gravity of the nut 1 from the rotational center line caused by the protruding portion 13 is eliminated or is made small by the first piece 3a being made of a material with a smaller specific gravity than the second piece 3b and the third piece 3c (that is, the configuration of the recessed portions that constitute the ball return passages).

Additionally, by forming the first piece 3a using a material with a smaller specific gravity than the second piece 3b and the third piece 3c, even if all the pieces 3a to 3c are made to have the same dimensions, all the pieces 3a to 3c are able to be arranged at equal intervals in the circumferential direction of the nut 1. Therefore, the distribution of load in the axial direction of the ball screw is able to be made uniform.

### Fourth Embodiment

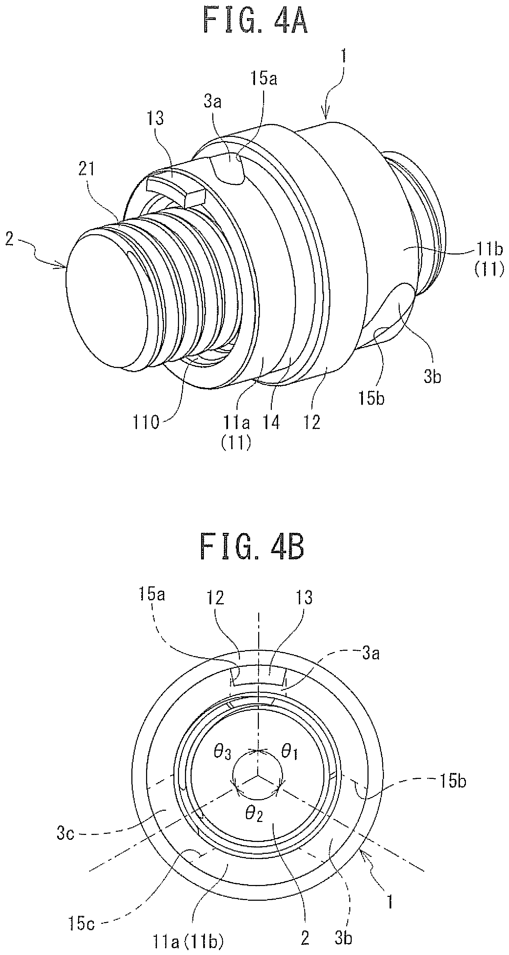

As illustrated in FIG. 4, a ball screw of this embodiment has the nut 1, the screw shaft 2, and the three pieces 3a to 3c.

The nut 1 has the cylindrical portion 11, the flange portion 12 formed at the center of the cylindrical portion 11 in the axial direction, and the protruding portion 13 that protrudes from one end surface in the axial direction. The cylindrical portion 11 is divided into the first portion 11a in which the protruding portion 13 is formed in the axial direction of the nut 1, and the second portion 11b excluding the first portion, by the flange portion 12. The peripheral groove 14 is formed at the boundary of the first portion 11a between the first portion 11a and the flange portion 12.

The nut 1 is formed with the three through-holes 15a to 15c passing through the nut in the radial direction. The first through-hole 15a is a portion including the peripheral groove 14 of the first portion 11a in the axial direction, and is formed at the same position as the protruding portion 13 in the circumferential direction. The second through-hole 15b is formed in the second portion 11b in the axial direction. The third through-hole 15c is formed in the second portion 11b in the axial direction. The three through-holes 15a to 15c are formed at equal intervals (θ1 = θ2 = θ3 = 120 degrees) in the circumferential directions of the nut 1. The second through-hole 15b and the third through-hole 15c have the same dimensions, and the dimensions of the first through-hole 15a are smaller than those of the second through-hole 15b and the third through-hole 15c.

The three pieces 3 have an elongated small piece shape, both ends of each piece in a longitudinal direction are formed in a substantially semicircular arc shape, a recessed portion along the longitudinal direction that forms a ball return passage is formed in one surface of the piece, and the other surface of the piece becomes a circumferential surface concentric with the cylindrical portion 11. The three pieces 3 are manufactured by a metal powder injection molding method using the same Fe-Ni-C (1 to 8% Ni and 0.8% C). The second piece 3b and the third piece 3c have the same dimensions, and the dimensions of the first piece 3a are smaller than the dimensions of the second piece 3b and the third piece 3c.

The pieces 3a to 3c are respectively fitted to the through-holes 15a to 15c of the nut 1 such that recessed portion sides are directed to the screw shaft 2 side. Accordingly, the first piece 3a is arranged at the same position as the protruding portion 13 in the circumferential direction of the nut 1, and the three pieces 3 are arranged at equal intervals (θ1 = θ2 = θ3 = 120 degrees) in the circumferential directions of the nut 1, and the inner peripheral surface of the nut 1 is formed with three ball return passages consisting of the recessed portions of the respective pieces 3.

The protruding portion 13 is made of steel and is formed integrally with the cylindrical portion 10. That is, the shape of the nut 1 is given by cutting a cylindrical material made of a steel material. Portions of the nut 1 in which the pieces 3a to 3c are fitted to the through-holes 15a to 15c are lighter than the other portions of the nut 1, and a portion of the nut 1 in which the protruding portion 13 is formed is heavier than the other portions of the nut 1.

In the ball screw of this embodiment, the nut 1 has the three pieces 3a to 3c, all the pieces 3a to 3c are arranged at equal intervals in the circumferential direction of the nut 1, the first piece 3a is arranged at the same position as the protruding portion 13 in the circumferential direction of the nut 1, and the deviation of the center of gravity of the nut 1 from the rotational center line caused by the protruding portion 13 is eliminated or is made small by the first piece 3a having smaller dimensions than the second piece 3b and the third piece 3c (that is, the configuration of the recessed portions that constitute the ball return passages).

Additionally, by making the dimensions of the first piece 3a smaller than those of the second piece 3b and the third piece 3c, all the pieces 3a to 3c are able to be arranged at equal intervals in the circumferential direction of the nut 1 while all the pieces 3a to 3c are made of the same material. Therefore, the distribution of load in the axial direction of the ball screw is able to be made uniform.

In addition, when the dimensions of the first piece 3a are not able to be made much smaller than those of the second piece 3b and the third piece 3c, and when the deviation of the center of gravity of the nut 1 from the rotational center line caused by the protruding portion 13 is not eliminated if all the pieces 3a to 3c are formed of the same material, the deviation is also able to be eliminated by forming the first piece 3a using a material with a smaller specific gravity than the second piece 3b and third piece 3c.

In addition, the present invention relates to the ball screw which has the protruding portion protruding from the axial end surface, in which the center of gravity of the nut deviates from the rotational center line of the nut. However, even in the ball screw in which the groove that extends in an axial direction is formed in the outer peripheral surface of the nut, the center of gravity of the nut deviates from the rotational center line of the nut. In the case of such a ball screw, the deviation of the center of gravity of the nut from the rotational center line is able to be made small also by forming the recessed portion, which constitutes the ball return passage formed in the inner peripheral surface of the nut, at a suitable position outside of the formation position of the groove.

Additionally, the axial end of the spiral groove formed in the inner peripheral surface of the nut is an incomplete threaded portion, and the presence of the incomplete threaded portion becomes a cause by which the center of gravity of the nut deviates from the rotational center line of the nut. However, the deviation of the center of gravity of the nut from the rotational center line is able to be made small also by forming the recessed portion, which constitutes the ball return passage formed in the inner peripheral surface of the nut, at a position outside of the incomplete threaded portion.

### Reference Signs List

- 1: nut
- 11: cylindrical portion
- 11a: first portion
- 11b: second portion
- 12: flange portion
- 13: protruding portion
- 14: peripheral groove
- 15: through-hole
- 15a: first through-hole
- 15b: second through-hole
- 15c: third through-hole
- 110: spiral groove of nut
- 2: screw shaft
- 21: spiral groove of screw shaft
- 3: segment
- 3a: first segment
- 3b: second segment (other segment)
- 3c: third segment (other segment)

## Claims

1. A ball screw, comprising:
a nut (1) having a spiral groove (110) formed on an inner peripheral surface;
a screw shaft (2) having a spiral groove (21) formed on an outer peripheral surface;
balls arranged between a raceway formed by the spiral groove (110) of the nut (1) and the spiral groove (21) of the screw shaft (2); and
a ball return passage configured to return the balls from an end point of the raceway to a start point of the raceway,
wherein the balls roll within the raceway and the screw shaft (2) moves in an axial direction when the nut (1) rotates,
wherein the nut (1) includes a cylindrical portion (11), a flange portion (12) formed at a center of the cylindrical portion (11) and a protruding portion (13) configured to protrude from an axial end surface, the protruding portion (13) being arranged at a part of the nut (1) in a circumferential direction,
wherein the ball return passage is a recessed portion formed on the inner peripheral surface of the nut (1), and
wherein a center of gravity of the nut (1) deviates from a rotational center line due to the protruding portion (13), and deviation is made smaller by the recessed portion;
**characterized in that**
the nut (1) includes two recessed portions, and
wherein the two recessed portions are arranged at the positions where central angles with the protruding portion (13) being as a reference become 90 degrees or less in the circumferential direction of the nut (1);
and **in that** the nut (1) and the protruding portion (13) are made of metal, wherein each recessed portion is formed by a piece (3) being fitted into a through-hole (15) passing through the nut (1) in a radial direction, wherein the piece (3) is made of synthetic resin;
wherein the through-hole (15) is formed at a position including the flange portion (12) in an axial direction.

2. A ball screw comprising:
a nut (1) having a spiral groove (110) formed on an inner peripheral surface;
a screw shaft (2) having a spiral groove (21) formed on an outer peripheral surface;
balls arranged between a raceway formed by the spiral groove (110) of the nut (1) and the spiral groove (21) of the screw shaft (2); and
a ball return passage configured to return the balls from an end point of the raceway to a start point of the raceway,
wherein the balls roll within the raceway and the screw shaft (2) moves in an axial direction when the nut (1) rotates,
wherein the nut (1) includes a cylindrical portion (11), a flange portion (12) formed at a center of the cylindrical portion (11) and a protruding portion (13) configured to protrude from an axial end surface, the protruding portion (13) being arranged at a part of the nut (1) in a circumferential direction,
wherein the ball return passage is a recessed portion formed on the inner peripheral surface of the nut (1), and
wherein a center of gravity of the nut (1) deviates from a rotational center line due to the protruding portion (13), and deviation is made smaller by the recessed portion;
**characterized in that**
the nut (1) includes at least three recessed portions,
wherein each recessed portion is formed by a piece (3) being fitted into a through-hole (15) passing through the nut (1) in a radial direction,
wherein all the pieces (3) have the same dimensions and are arranged at equal intervals in the circumferential direction of the nut (1), and
wherein a first one of the pieces (3) is arranged at the position same as the position of the protruding portion (13) in the circumferential direction of the nut (1) and is made of a material with a specific gravity smaller than the specific gravities of the other pieces.

3. A ball screw comprising:
a nut (1) having a spiral groove (110) formed on an inner peripheral surface;
a screw shaft (2) having a spiral groove (21) formed on an outer peripheral surface;
balls arranged between a raceway formed by the spiral groove (110) of the nut (1) and the spiral groove (21) of the screw shaft (2); and
a ball return passage configured to return the balls from an end point of the raceway to a start point of the raceway,
wherein the balls roll within the raceway and the screw shaft (2) moves in an axial direction when the nut (1) rotates,
wherein the nut (1) includes a cylindrical portion (11), a flange portion (12) formed at a center of the cylindrical portion (11) and a protruding portion (13) configured to protrude from an axial end surface, the protruding portion (13) being arranged at a part of the nut (1) in a circumferential direction,
wherein the ball return passage is a recessed portion formed on the inner peripheral surface of the nut (1), and
wherein a center of gravity of the nut (1) deviates from a rotational center line due to the protruding portion (13), and deviation is made smaller by the recessed portion;
**characterized in that**
the nut (1) includes at least three recessed portions,
wherein each recessed portion is formed by a piece (3) being fitted into a through-hole (15) passing through the nut (1) in a radial direction,
wherein all the pieces (3) are manufactured by a same material and arranged at equal intervals in the circumferential direction of the nut (1), and
wherein a first one of the pieces (3) is arranged at the position same as the position of the protruding portion in the circumferential direction of the nut (1), and has dimensions smaller than the dimensions of the other pieces.

## Patentansprüche

1. Kugelspindel, umfassend:
eine Mutter (1) mit einer Spiralnut (110), die an einer inneren Umfangsfläche ausgebildet ist;
eine Schneckenwelle (2) mit einer Spiralnut (21), die an einer äußeren Umfangsfläche ausgebildet ist;
Kugeln, die zwischen einer Laufbahn angeordnet sind, die durch die Spiralnut (110) der Mutter (1) und die Spiralnut (21) der Schneckenwelle (2) gebildet wird; und
einen Kugelrückführungskanal, der konfiguriert ist, um die Kugeln von einem Endpunkt der Laufbahn zu einem Startpunkt der Laufbahn zurückzubringen;
wobei die Kugeln innerhalb der Laufbahn rollen und sich die Schneckenwelle (2) in axialer Richtung bewegt, wenn sich die Mutter (1) dreht,
wobei die Mutter (1) einen zylindrischen Abschnitt (11), einen Flanschabschnitt (12), der in einer Mitte des zylindrischen Abschnitts (11) ausgebildet ist, und einen hervorstehenden Abschnitt (13) umfasst, der so konfiguriert ist, dass er aus einer axialen Endfläche hervorsteht, wobei der hervorstehende Abschnitt (13) an einem Teil der Mutter (1) in Umfangsrichtung angeordnet ist,
wobei der Kugelrückführungskanal ein vertiefter Abschnitt ist, der an der inneren Umfangsfläche der Mutter (1) ausgebildet ist, und
wobei ein Gravitationszentrum der Mutter (1) aufgrund des hervorstehenden Abschnitts (13) von einer Rotationsmittellinie abweicht und die Abweichung durch den vertieften Abschnitt kleiner gemacht wird;
**dadurch gekennzeichnet, dass**
die Mutter (1) zwei vertiefte Abschnitte enthält und
wobei die zwei vertieften Abschnitte an den Positionen angeordnet sind, an denen zentrale Winkel mit dem hervorstehenden Abschnitt (13), der als Referenz dient, in Umfangsrichtung der Mutter (1) 90 Grad oder weniger betragen;
und dass die Mutter (1) und der hervorstehende Abschnitt (13) aus Metall bestehen,
wobei jeder vertiefte Abschnitt durch ein Teil (3) gebildet wird, das in radialer Richtung in ein Durchgangsloch (15) eingepasst ist, das durch die Mutter (1) in einer Radialrichtung verläuft, wobei das Teil (3) aus Kunstharz besteht;
wobei das Durchgangsloch (15) an einer Position ausgebildet ist, die den Flanschabschnitt (12) in axialer Richtung enthält.

2. Kugelspindel, umfassend:
eine Mutter (1) mit einer Spiralnut (110), die an einer inneren Umfangsfläche ausgebildet ist;
eine Schneckenwelle (2) mit einer Spiralnut (21), die an einer äußeren Umfangsfläche ausgebildet ist;
Kugeln, die zwischen einer Laufbahn angeordnet sind, die durch die Spiralnut (110) der Mutter (1) und die Spiralnut (21) der Schneckenwelle (2) gebildet wird; und
einen Kugelrückführungskanal, der konfiguriert ist, um die Kugeln von einem Endpunkt der Laufbahn zu einem Startpunkt der Laufbahn zurückzubringen;
wobei die Kugeln innerhalb der Laufbahn rollen und sich die Schneckenwelle (2) in axialer Richtung bewegt, wenn sich die Mutter (1) dreht,
wobei die Mutter (1) einen zylindrischen Abschnitt (11), einen Flanschabschnitt (12), der in einer Mitte des zylindrischen Abschnitts (11) ausgebildet ist, und einen hervorstehenden Abschnitt (13) umfasst, der so konfiguriert ist, dass er aus einer axialen Endfläche hervorsteht, wobei der hervorstehende Abschnitt (13) an einem Teil der Mutter (1) in Umfangsrichtung angeordnet ist,
wobei der Kugelrückführungskanal ein vertiefter Abschnitt ist, der an der inneren Umfangsfläche der Mutter (1) ausgebildet ist, und
wobei ein Gravitationszentrum der Mutter (1) aufgrund des hervorstehenden Abschnitts (13) von einer Rotationsmittellinie abweicht und die Abweichung durch den vertieften Abschnitt kleiner gemacht wird;
**dadurch gekennzeichnet, dass**
die Mutter (1) mindestens drei vertiefte Abschnitte enthält,
wobei jeder vertiefte Abschnitt durch ein Teil (3) gebildet wird, das in ein Durchgangsloch (15) eingepasst ist, das in radialer Richtung durch die Mutter (1) verläuft;
wobei alle Teile (3) die gleichen Abmessungen haben und in gleichen Abständen in Umfangsrichtung der Mutter (1) angeordnet sind, und
wobei ein erstes der Teile (3) an der gleichen Position wie die Position des hervorstehenden Abschnitts (13) in Umfangsrichtung der Mutter (1) angeordnet ist und aus einem Material mit einer spezifischen Gravitation besteht, die kleiner als die spezifische Gravitation der anderen Teile ist.

3. Kugelspindel, umfassend:
eine Mutter (1) mit einer Spiralnut (110), die an einer inneren Umfangsfläche ausgebildet ist;
eine Schneckenwelle (2) mit einer Spiralnut (21), die an einer äußeren Umfangsfläche ausgebildet ist;
Kugeln, die zwischen einer Laufbahn angeordnet sind, die durch die Spiralnut (110) der Mutter (1) und die Spiralnut (21) der Schneckenwelle (2) gebildet wird; und
einen Kugelrückführungskanal, der konfiguriert ist, um die Kugeln von einem Endpunkt der Laufbahn zu einem Startpunkt der Laufbahn zurückzubringen;
wobei die Kugeln innerhalb der Laufbahn rollen und sich die Schneckenwelle (2) in axialer Richtung bewegt, wenn sich die Mutter (1) dreht,
wobei die Mutter (1) einen zylindrischen Abschnitt (11), einen Flanschabschnitt (12), der in einer Mitte des zylindrischen Abschnitts (11) ausgebildet ist, und einen hervorstehenden Abschnitt (13) umfasst, der so konfiguriert ist, dass er aus einer axialen Endfläche hervorsteht, wobei der hervorstehende Abschnitt (13) an einem Teil der Mutter (1) in Umfangsrichtung angeordnet ist,
wobei der Kugelrückführungskanal ein vertiefter Abschnitt ist, der an der inneren Umfangsfläche der Mutter (1) ausgebildet ist, und
wobei ein Gravitationszentrum der Mutter (1) aufgrund des hervorstehenden Abschnitts (13) von einer Rotationsmittellinie abweicht und die Abweichung durch den vertieften Abschnitt kleiner gemacht wird;
**dadurch gekennzeichnet, dass**
die Mutter (1) zumindest drei vertiefte Abschnitte enthält,
wobei jeder vertiefte Abschnitt durch ein Teil (3) gebildet wird, das in ein Durchgangsloch (15) eingepasst ist, das in radialer Richtung durch die Mutter (1) verläuft;
wobei alle Teile (3) aus demselben Material hergestellt und in gleichen Abständen in Umfangsrichtung der Mutter (1) angeordnet sind, und
wobei ein erstes der Teile (3) an der gleichen Position wie die Position des hervorstehenden Abschnitts in der Umfangsrichtung der Mutter (1) angeordnet ist und Abmessungen aufweist, die kleiner als die Abmessungen der anderen Teile sind.

## Revendications

1. Vis à billes comprenant :
un écrou (1) ayant une rainure en spirale (110) formée sur une surface périphérique interne ;
une tige de vis (2) ayant une rainure en spirale (21) formée sur une surface périphérique externe ;
des billes agencées entre un chemin de roulement formé par la rainure en spirale (110) de l'écrou (1) et la rainure en spirale (21) de la tige de vis (2) ; et
un passage de retour de billes configuré pour ramener les billes d'un point d'arrivée du chemin de roulement à un point de départ du chemin de roulement,
dans laquelle les billes roulent dans le chemin de roulement et la tige de vis (2) se déplace dans une direction axiale lorsque l'écrou (1) tourne,
dans laquelle l'écrou (1) comprend une partie cylindrique (11), une partie de bride (12) formée au niveau d'un centre de la partie cylindrique (11) et une partie en saillie (13) configurée pour faire saillie d'une surface d'extrémité axiale, la partie en saillie (13) étant agencée au niveau d'une partie de l'écrou (1) dans une direction circonférentielle,
dans laquelle le passage de retour de billes est une partie évidée formée sur la surface périphérique interne de l'écrou (1), et
dans laquelle un centre de gravité de l'écrou (1) dévie d'une ligne centrale rotative en raison de la partie en saillie (13), et la déviation est rétrécie par la partie évidée ;
**caractérisée en ce que** :
l'écrou (1) comprend deux parties évidées, et
dans laquelle les deux parties évidées sont agencées dans les positions dans lesquelles les angles centraux avec la partie en saillie (13) qui est prise en tant que référence, sont de 90 degrés ou moins dans la direction circonférentielle de l'écrou (1) ;
et **en ce que** l'écrou (1) et la partie en saillie (13) sont réalisés à partir de métal,
dans laquelle chaque partie évidée est formée par une pièce (3) qui est montée dans un trou débouchant (15) passant par l'écrou (1) dans une direction radiale, dans laquelle la pièce (3) est réalisée à partir de résine synthétique ;
dans laquelle le trou débouchant (15) est formé dans une position comprenant la partie de bride (12) dans une direction axiale.

2. Vis à billes comprenant :
un écrou (1) ayant une rainure en spirale (110) formée sur une surface périphérique interne ;
une tige de vis (2) ayant une rainure en spirale (21) formée sur une surface périphérique externe ;
des billes agencées entre un chemin de roulement formé par la rainure en spirale (110) de l'écrou (1) et la rainure en spirale (21) de la tige de vis (2) ; et
un passage de retour de billes configuré pour ramener les billes d'un point d'arrivée du chemin de roulement à un point de départ du chemin de roulement,
dans laquelle les billes roulent dans le chemin de roulement et la tige de vis (2) se déplace dans une direction axiale lorsque l'écrou (1) tourne,
dans laquelle l'écrou (1) comprend une partie cylindrique (11), une partie de bride (12) formée au niveau d'un centre de la partie cylindrique (11) et une partie en saillie (13) configurée pour faire saillie d'une surface d'extrémité axiale, la partie en saillie (13) étant agencée au niveau d'une partie de l'écrou (1) dans une direction circonférentielle,
dans laquelle le passage de retour de billes est une partie évidée formée sur la surface périphérique interne de l'écrou (1), et
dans laquelle un centre de gravité de l'écrou (1) dévie d'une ligne centrale rotative en raison de la partie en saillie (13), et la déviation est rétrécie par la partie évidée ;
**caractérisée en ce que** :
l'écrou (1) comprend au moins trois parties évidées,
dans laquelle chaque partie évidée est formée par une pièce (3) qui est montée dans un trou débouchant (15) passant par l'écrou (1) dans une direction radiale,
dans laquelle toutes les pièces (3) ont les mêmes dimensions et sont agencées à intervalles égaux dans la direction circonférentielle de l'écrou (1), et
dans laquelle une première des pièces (3) est agencée dans la même position que la position de la partie en saillie (13) dans la direction circonférentielle de l'écrou (1) et est réalisée avec un matériau avec une gravité spécifique inférieure aux gravités spécifiques des autres pièces.

3. Vis à billes comprenant :
un écrou (1) ayant une rainure en spirale (110) formée sur une surface périphérique interne ;
une tige de vis (2) ayant une rainure en spirale (21) formée sur une surface périphérique externe ;
des billes agencées entre un chemin de roulement formé par la rainure en spirale (110) de l'écrou (1) et la rainure en spirale (21) de la tige de vis (2) ; et
un passage de retour de billes configuré pour ramener les billes d'un point d'arrivée du chemin de roulement à un point de départ du chemin de roulement,
dans laquelle les billes roulent dans le chemin de roulement et la tige de vis (2) se déplace dans une direction axiale lorsque l'écrou (1) tourne,
dans laquelle l'écrou (1) comprend une partie cylindrique (11), une partie de bride (12) formée au niveau d'un centre de la partie cylindrique (11) et une partie en saillie (13) configurée pour faire saillie d'une surface d'extrémité axiale, la partie en saillie (13) étant agencée au niveau d'une partie de l'écrou (1) dans une direction circonférentielle,
dans laquelle le passage de retour de billes est une partie évidée formée sur la surface périphérique interne de l'écrou (1), et
dans laquelle un centre de gravité de l'écrou (1) dévie d'une ligne centrale rotative en raison de la partie en saillie (13), et la déviation est rétrécie par la partie évidée ;
**caractérisée en ce que** :
l'écrou (1) comprend au moins trois parties évidées,
dans laquelle chaque partie évidée est formée par une pièce (3) qui est montée dans un trou débouchant (15) passant par l'écrou (1) dans une direction radiale,
dans laquelle toutes les pièces (3) sont fabriquées avec le même matériau et agencées à intervalles égaux dans la direction circonférentielle de l'écrou (1), et
dans laquelle une première des pièces (3) est agencée dans la même position que la position de la partie en saillie dans la direction circonférentielle de l'écrou (1), et a des dimensions inférieures aux dimensions des autres pièces.
